(19) Europäisches Patentamt

European Patent Office

Office européen des brevets

(11) **EP 4 510 041 A1**

(12) **EUROPEAN PATENT APPLICATION**

(43) Date of publication:
**19.02.2025 Bulletin 2025/08**

(21) Application number: **23192190.9**

(22) Date of filing: **18.08.2023**

(51) International Patent Classification (IPC):
**G06N 3/0455** (2023.01)    **G06N 3/084** (2023.01)
**G06N 3/096** (2023.01)

(52) Cooperative Patent Classification (CPC):
**G06N 3/0455; G06N 3/084; G06N 3/096**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **TOYOTA JIDOSHA KABUSHIKI KAISHA**
**Toyota-shi, Aichi-ken, 471 8571 (JP)**
• **King Abdullah University of Science and Technology**
**Thuwal 23955 (SA)**

(72) Inventors:
• **ALJUNDI, Rahaf**
**1140 Brussels (BE)**
• **ZHANG, Wenxuan**
**23955-6900 Thuwal (SA)**
• **ELHOSEINY, Mohamed H.**
**23955-6900 Thuwal (SA)**

(74) Representative: **Cabinet Beau de Loménie**
**158, rue de l'Université**
**75340 Paris Cedex 07 (FR)**

(54) **METHODS FOR CONTINUAL LEARNING AND SYSTEMS IMPLEMENTING SUCH METHODS**

(57)    A computer-implemented continual learning method is provided. The method comprises steps of: (S10) providing a model pre-trained for a first task; (S20) selecting specialized parameters of the model that are specialized for a second task; and (S30) adapting the model to the second task by updating said specialized parameters.

**FIG.1**

# EP 4 510 041 A1

## Description

BACKGROUND OF THE INVENTION

1. Field of the Invention

The invention relates to the field of continual learning. In particular, the invention relates to methods for continual learning of neural networks. Further, the invention relates to systems implementing such method, in particular driver assistance systems.

2. Description of Related Art

Pre-training techniques have become very effective in establishing powerful generic machine learning models such as CLIP [REF 1] and Flamingo [REF 2]. Such models are pre-trained on vast and diverse datasets, providing them with a broad knowledge that allows them to be directly applied to various tasks such as image understanding or natural language processing. However, such models may still lack specific knowledge when applied to specific tasks. Further, when attempting to adapt such models to a specific task, some forgetting of their generic knowledge can occur, thereby undermining their subsequent transferability to other tasks.

In this context, continual learning, also known as incremental learning, is a dynamic approach in machine learning that enables models to learn from a continuous stream of data over time. Unlike traditional machine learning where models are trained on fixed datasets, continual learning tackles the challenge of adapting to changing environments, concept drift, and new information without forgetting previously learned knowledge.

In particular, continual learning has become a powerful tool to adapt (fine-tune) a pre-trained model to varying specific tasks and/or datasets that are different from the task and dataset used during pre-training [REF 3].

Recently, the main focus of research has been on incorporating extra parameters into the model to facilitate learning of new information (see [REF 4], [REF 5] and [REF 6]). Nonetheless, determining the optimal set of newly added parameters to employ during inference presents challenges, and expanding the model after an extended sequence of learning becomes cumbersome. Furthermore, enhancing the pre-trained model with new parameters does not necessarily lead to performance improvements, particularly when the model lacks specific knowledge.

The following references disclose various methods related to machine learning models, continual learning, and datasets used to train machine learning models.

[REF 1] RADFORD, Alec, KIM, Jong Wook, HALLACY, Chris, et al. Learning transferable visual models from natural language supervision. In : International conference on machine learning. PMLR, 2021. p. 8748-8763.

[REF 2] LI, Junnan, LI, Dongxu, SAVARESE, Silvio, et al. Blip-2: Bootstrapping language-image pre-training with frozen image encoders and large language models. arXiv preprint arXiv:2301.12597, 2023.

[REF 3] MALLYA, Arun, DAVIS, Dillon, et LAZEBNIK, Svetlana. Piggyback: Adapting a single network to multiple tasks by learning to mask weights. In : Proceedings of the European conference on computer vision (ECCV). 2018. p. 67-82.

[REF 4] WANG, Yabin, HUANG, Zhiwu, et HONG, Xiaopeng. S-prompts learning with pre-trained transformers: An occam's razor for domain incremental learning. Advances in Neural Information Processing Systems, 2022, vol. 35, p. 5682-5695.

[REF 5] WANG, Zifeng, ZHANG, Zizhao, EBRAHIMI, Sayna, et al. Dualprompt: Complementary prompting for rehearsal-free continual learning. In : European Conference on Computer Vision. Cham : Springer Nature Switzerland, 2022. p. 631-648.

[REF 6] WANG, Zifeng, ZHANG, Zizhao, LEE, Chen-Yu, et al. Learning to prompt for continual learning. In : Proceedings of the IEEE/CVF Conference on Computer Vision and Pattern Recognition. 2022. p. 139-149.

[REF 7] XIANG, Jiannan, TAO, Tianhua, GU, Yi, et al. Language Models Meet World Models: Embodied Experiences Enhance Language Models. arXiv preprint arXiv:2305.10626, 2023.

[REF 8] ZHENG, Zangwei, MA, Mingyuan, WANG, Kai, et al. Preventing Zero-Shot Transfer Degradation in Continual Learning of Vision-Language Models. arXiv preprint arXiv:2303.06628, 2023.

[REF 9] ALJUNDI, Rahaf, BABILONI, Francesca, ELHOSEINY, Mohamed, et al. Memory aware synapses: Learning what (not) to forget. In : Proceedings of the European conference on computer vision (ECCV). 2018. p. 139-154.

[REF 10] CHAUDHRY, Arslan, ROHRBACH, Marcus, ELHOSEINY, Mohamed, et al. On tiny episodic memories in continual learning. arXiv preprint arXiv:1902.10486, 2019.

[REF 11] DE LANGE, Matthias, ALJUNDI, Rahaf, MASANA, Marc, et al. A continual learning survey: Defying forgetting in classification tasks. IEEE transactions on pattern analysis and machine intelligence, 2021, vol. 44, no 7, p. 3366-3385.

[REF 12] BERG, Thomas, LIU, Jiongxin, WOO LEE, Seung, et al. Birdsnap: Large-scale fine-grained visual categorization of birds. In : Proceedings of the IEEE Conference on Computer Vision and Pattern Recognition. 2014. p. 2011-2018.

[REF 13] WAH, Catherine, BRANSON, Steve, WELINDER, Peter, et al. The caltech-ucsd birds-200-2011 dataset. 2011.

[REF 14] KRIZHEVSKY, Alex, HINTON, Geoffrey, et al. Learning multiple layers of features from tiny images. 2009.

[REF 15] MAJI, Subhransu, RAHTU, Esa, KANNALA, Juho, et al. Fine-grained visual classification of aircraft. arXiv preprint arXiv:1306.5151, 2013.

[REF 16] KRAUSE, Jonathan, STARK, Michael, DENG, Jia, et al. 3d object representations for fine-grained categorization. In : Proceedings of the IEEE international conference on computer vision workshops. 2013. p. 554-561.

[REF 17] STALLKAMP, Johannes, SCHLIPSING, Marc, SALMEN, Jan, et al. Man vs. computer: Benchmarking machine learning algorithms for traffic sign recognition. Neural networks, 2012, vol. 32, p. 323-332.

## SUMMARY OF THE INVENTION

According to aspects of the present disclosure, a computer-implemented method for continual learning is provided. The method comprises the steps of:

- providing a model pre-trained for a first task;
- selecting specialized parameters of the model that are specialized for a second task; and
- adapting the model to the second task by updating said specialized parameters.

In the present description, adapting a model to a second task by updating specialized parameters refers to the modification of the specialized parameters of the model so that the model performs better on the second task. In particular, this can be done by adjusting the specialized parameters in order to minimize a loss function evaluating performance of the model on the second task. Such loss function may, for example, be configured to estimate differences between the output of the model fed with data pertaining to the second task and expected output known from labelled data of the second task.

With the present method, it is possible to continually adapt a generic machine learning model pre-trained for a first task to various sequential tasks (comprising at least a second task) without losing knowledge acquired on the previous tasks. In particular, when adapting the model to a new task, only a selected number of parameters of the model that are particularly relevant to the new task (specialized parameters) are updated while the other parameters are fixed. Therefore, the knowledge acquired during adaptation to previous tasks, including the original knowledge related to the pre-training is maintained. Interestingly, as only a portion of the parameters of the system are updated, the method is computationally efficient and there is no overfitting of the model to the new task. Further, the method advantageously does not need information on the training datasets used to pre-train the model.

This stands in stark contrast to conventional methods in the prior art, where all parameters are updated for each new task, resulting in a loss of knowledge acquired during adaptation to previous tasks and/or leading to lower computational efficiency.

In particular, in the method disclosed by Xiang et al. [REF 7], although the model is adapted to new tasks through low rank updates, all the parameters of the model are updated, which causes a loss of the knowledge acquired during adaptation to previous tasks.

Additionally, the method according to the present disclosure offers distinct advantages over methods like the one proposed by Zheng et al. [REF 8], where knowledge degradation is mitigated through distillation on the pre-trained model weights. In particular, the method of Zheng et al. necessitates access to the large dataset used for training the model, which limits its computational efficiency and practicality (because the training dataset is not always available).

According to embodiments, the method further comprises a step of freezing all parameters of the model other than the specialized parameters (of the second task) when adapting the model to the second task.

According to embodiments, the step of selecting specialized parameters of the model that are specialized for a second task comprises:

- providing a loss function evaluating the performance of the model applied to the second task; wherein the specialized parameters are selected among parameters that cause a largest reduction of the loss function for data points corresponding to the second task.

According to embodiments, the specialized parameters are selected as a percentage of the parameters that have the largest magnitude of a gradient of the loss function with respect to data points corresponding to the second task. In embodiments, the selected percentage of parameters is preferably inferior or equal to 10% (of the number of parameters for which the gradient is calculated).

According to embodiments, the method further comprises a step of:

- adding a penalty term to a loss function used for adapting the model for the second task in order to encourage the model to keep parameter values close to original values learned during training for the first task.

According to embodiments, the added penalty term is computed after each task and accumulated with the penalty term computed for previous tasks.

According to embodiments, the model is sequentially adapted to a plurality of tasks by repeating steps of the method for subsequent tasks.

According to embodiments, at least a subset of data used during adaptation of the model to a task is stored, and wherein, when the model is adapted to the subsequent task, the specialized parameters related to the subsequent task are updated in order to minimize a loss term evaluating performance of the model applied to such subset of data, and to minimize a loss term evaluating performance of the model applied on the data of the subsequent task.

According to embodiments, the model is a transformer-based image recognition model and the specialized parameters of a task comprise parameters of a layer of a multilayer perceptron (of the image recognition model).

According to embodiments, the specialized parameters comprise only parameters from an input layer of the multilayer perceptron.

According to embodiments, the specialized parameters comprise only parameters of selected neurons of a layer of the multilayer perceptron. In the present description, the parameters of a selected neuron are all the parameters that are connected to such neuron. The selected neurons may be selected from a given layer of the multilayer perceptron, for example the input layer.

The present disclosure is further related to a driver assistance system comprising:

- a sensor unit configured to capture data from one or more sensors, wherein the data includes information about a driving scene surrounding a vehicle;
- a processing unit communicatively coupled to the sensor unit comprising:
- a continual learning module configured to process the captured data and continuously update parameters of a neural network based on the incoming data, in order to learn and adapt to changing driving scenarios over time, wherein the neural network is updated using the present continual learning method in order to retain knowledge from previously captured data while incorporating new data,
  wherein the processing unit is configured to receive processed data from the neural network and generate real-time predictions based on the driving scene;
- a memory unit configured to store previously captured data used for continual learning of the neural network; and
- a control unit configured to provide control signals based on the real-time predictions in order to enhance driver safety and vehicle control in response to given driving conditions.

The present disclosure is further related to a vehicle comprising the present driver assistance system.

In the present description, a vehicle may comprise various types of vehicles (for example a car) with various levels of autonomy. In particular the vehicle may be a vehicle with Society of Automotive Engineers (SAE) levels ranging from 2 to 5.

The present disclosure is further related to a computer program set including instructions for executing the steps of the above described method when said program is executed by at least one computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram representing aspects of a method according to the present disclosure;

FIG. 2 is a block diagram representing aspects of a system according to the present disclosure;

FIGS. 3A-3B are diagrams representing aspects of a method according to the present disclosure; and

FIGS. 4-5 are tables illustrating relative performances of embodiments of the method according to the present disclosure.

DETAILED DESCRIPTION OF EMBODIMENTS

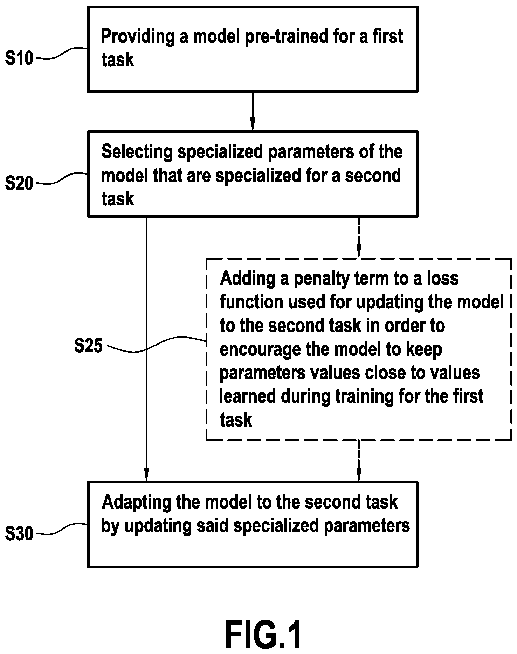

Methods for continual learning of neural network-based models and systems using such methods, which constitute exemplary embodiments of the present disclosure, are now going to be presented in relation with FIGS. 1-5.

According to embodiments, the present disclosure relates to a computer-implemented continual learning method comprising the steps represented in FIG. 1. Specifically, the method may comprise the steps of: S10 providing a model pre-trained for a first task; S20 selecting specialized parameters of the model that are specialized for a second task; and S30 adapting the model to the second task by updating said specialized parameters. According to embodiments, a purpose of the method is to adapt a model that is pre-trained for a first task to subsequent tasks comprising at least a second task.

In step S10, a pre-trained model is provided. The model may be any machine learning model that has been trained on a dataset corresponding to a first task. In particular, the model may be a so-called foundation model that has been pre-trained on a large dataset in order to acquire a generic knowledge. The pre-training of the model may be supervised, using labelled data or unsupervised, using unlabeled data. The training of the model may be based on semi-supervision methods or self-supervision methods.

In embodiments, the pre-trained model is a vision language model such as the CLIP model, as disclosed in [REF 1]. The model is generally pre-trained on a large dataset (for example 400 million) of images and text samples, namely WebImageText. Such CLIP model may have an architecture comprising two encoders, a first encoder that is a text encoder, and a second encoder that is an image encoder.

In embodiments, the model may be based on transformers. In particular, the model may comprise a multilayer perceptron with an input layer, an output layer, and one or more hidden layers.

In step S20, parameters of the model that are specialized to the second task are identified. The second task may be a specific task for which the pre-trained model lacks specific knowledge. As an example, when the first task is object recognition on a general dataset, the second task may comprise traffic signs dataset, fine-grained datasets on specific species, or general object recognition on new environment (such as new cities and/or new weather conditions).

In embodiments, the pre-trained model is sequentially adapted to a plurality of tasks using the present continual learning method.

In particular, a set of specialized parameters, $\theta_U$, is selected based on a given current task dataset, $D_t$, and on a given pre-trained model with learned parameters, $\theta$.

The set of specialized parameters is selected subjecting to $|\theta_U|/|\theta| = s$, where $|\ |$ is the parameter size and s is the parameter selection ratio. The task dataset may generally be written as $D_t = \{x_k; y_k\}_{k=1}^{N_t}$, wherein, $x_k$, is a set of training images, $y_k$, is a set of labels corresponding to the training images, and, $N_t$, is the size of the set of training images (the number of images).

The set of specialized parameters may be determined to be most important to the dataset, $D_t$, according to a scoring function, $S(\theta, D_t)$ which parametrizes the importance of the parameters for the current task. In particular, the specialized parameters may be a percentage of parameters of the model for which the scoring function has the largest value.

In embodiments, the specialized parameters are parameters for which minor variations in their values yield the most substantial decrease in the loss function used to train the model on the current task dataset, the minor variations being in the opposite direction of the gradient.

For example, as a first approximation, a minor variation, $\delta$, in the loss function, L, used to train the model for a current task dataset, $D_t$, may be described by the following equation.

$$L(x_k, y_k; \theta + \delta) \approx L(x_k, y_k; \theta) - \sum_{i,j} g_{ij}(x_k)\delta_{ij} \qquad \text{(Equation 1)}$$

In Equation 1, $g_{ij}(x_k) = \frac{\partial[L(x_k, y_k; \theta)]}{\partial \theta_{ij}}$ is the gradient of the loss function, L, with respect to the parameter, $\theta_{ij}$, wherein the loss function is evaluated at labelled data points $\{x_k; y_k\}$, which are the labelled data of the current task dataset. The indices (i,j) of the parameters, $\theta_{ij}$, may refer to a transformer block wherein the parameter is located and an index of the parameter in that block, respectively.

Parameters with the largest gradients incur the most changes (decrease) in the loss function, amid small changes in their values. Therefore, it is advantageous to select the specialized parameters as the parameters that have the largest magnitude of the gradient of the loss function.

Therefore, the scoring function may be based on Equation 1. In particular, the scoring function may be an accumulation of the gradient magnitudes over the data points of the current dataset, which can be expressed as follows.

$$S\left(\theta_{ij}, D_t\right) = \frac{1}{N_t} \sum_{k=1}^{N_t} \left\| g_{ij}(x_k) \right\| \qquad \text{(Equation 2)}$$

Using the scoring function, the specialized parameters may be selected as a top percentage of the parameters for which the scoring function is the largest. Such top percentage of parameters is defined as the parameter selection ratio, s, expressed in percentage.

For example, the inventors have observed that selecting the top 10% of parameters using the scoring function defined in Equation 2 is particularly advantageous.

In particular, when the model is a transformer-based model comprising a multilayer perceptron (MLP), the inventors have observed that it is advantageous to select specialized parameters only among the parameters of an input layer of the MLP. In such cases, the scoring function (such as the one of Equation 2) may be calculated only over the parameters of the input layer of the MLP. Further, the inventors have observed that selecting only the top 10% of parameters among the parameters of the input layer is advantageous, which generally represents about 3% of the total number of parameters.

In step S30, once the parameters specialized to the second task are identified, the model is adapted to the second task by updating the specialized parameters.

In embodiments, the specialized parameters are selected as the only parameters that are updated in order to adapt the model to a subsequent task. The other parameters of the model may therefore be frozen (fixed) during such adaptation.

In embodiments, in order to prevent forgetting of the previous tasks, $D_{<t}$, a weight regularization method is applied to the parameters. The weight regularization may be, for example, similar to the MAS method disclosed in [REF 9].

In particular, in step S25, a regularization loss term (penalty term) may be introduced in the loss function used to train the model to the second task in order to encourage the model to keep parameter values close to original values learned during training for the first task.

More generally, when adapting the model to subsequent tasks, this approach helps prevent significant changes of specialized parameters of a current task that are also particularly relevant to knowledge acquired during previous tasks, including the generic knowledge acquired during pre-training.

The penalty term, for a task, t, may be expressed as follows:

$$\mathcal{L}_R^t = \lambda \sum_{i,j \subseteq I_U} \Omega_{ij}^t \left( \theta_{U_{ij}} - \theta_{U_{ij}}^* \right)^2$$

$$\text{(Equation 3)}$$

In Equation 3, $\lambda$, is a hyper parameter defining the weight of the regularization loss. The sum term is going over the parameters of indices, (i,j), among the set of specialized parameters $I_U$. $\theta_{U_{ij}}$ is the vector representing the parameters that are being updated at the current task, $t$. $\theta_{U_{ij}}^*$, is the vector representing the parameters of the model that have been trained before the current task, t. When starting with a pre-trained model, the vector, $\theta_{U_{ij}}^*$, corresponds to the set of parameters of the pre-trained model.

Further, in Equation 3, $\Omega_{ij}^t$, is the importance score calculated for a parameter of indices, (i,j), for all previous tasks. Such score relates to the importance of the parameters in the knowledge of the previous tasks. When adapting the model to sequential tasks, the importance score may be calculated recursively, taking into account the importance scores from previous tasks. The importance score, $\Omega_{ij}^{t-1}$, for the previous task, $t-1$, is to be estimated prior to learning current task, $t$. In embodiments, $\Omega_{ij}^{t-1}$, is estimated directly after learning previous task, $t-1$. Further, when starting from a pre-trained model with no access to previous data, the importance score for the previous task is set to zero.

In embodiments, the important score, $\Omega_{ij}^t$, may be computed, for example, by a moving average of an accumulated norm of a gradient of a function learned by the model as follows.

$$\Omega_{ij}^{t} = (1 - \alpha)\Omega_{ij}^{t-1} + \alpha \frac{1}{k} \sum_{x_k \in D^{t-1}} \left\| g_{ij}(x_k) \right\|$$

(Equation 4)

wherein

$$g_{ij}(x_k) = \frac{\partial \left[ L_2^2(f_\theta(x_k)) \right]}{\partial \theta_{ij}}$$

(Equation 5)

In Equations 4 and 5:

-   $k$, is the number of samples of the previous task, $t\text{-}1$;
-   $\alpha$ is a weight regularization coefficient that may be set to $1/(t\text{-}1)$; and
-   $g_{ij}(x_k)$ is the gradient of the input-output mapping function; $f_\theta$, that is learned by the model up to task t-1. The gradient is evaluated for a given sample $x_k$ of the previous task, $t\text{-}1$. As expressed in Equation 5, the gradient may be the gradient of the squared $L_2$ norm of the mapping function.

Advantageously, when combining the present method with the MAS weight regularization scheme disclosed in [REF 9], there is no need to know the labels of the task dataset. In particular, the labels are not required to compute the importance score.

Alternatively, any other method can be used to estimate the importance score of parameters of a task.

In embodiments, the importance factor is calculated after each task and accumulated with previous tasks in order to prevent large changes on parameters that are crucial for performance of the previous tasks.

Further, a replay buffer may be used to store some subset of samples (such as data points, images, or other samples) from previous tasks datasets in order to account for such previous tasks when calculating the loss function in order to adapt the model to new tasks. In particular, during learning of a new task, the loss on the buffer samples is also minimized in addition to the other terms of the loss function.

The replay buffer may be updated at the end of each task by reservoir sampling, see [REF 10]. Further, batches of the same size as the task dataset may be sampled from the replay buffer at each optimization step.

In embodiments, when combining the present method with weight regularization and reservoir sampling, the loss function used to train the model for a new task "t" may be expressed as follows.

$$L^t = L(f_\theta, D^t) + L(f_\theta, M^t) + L_R^t$$

(Equation 6)

In Equation 6, the loss function used to adapt the model to the current task, t, comprises three terms. The first term relates to the optimization of the parameters of the model on the dataset of current task, t. The second term relates to the optimization of the parameters of the model on a dataset consisting of a replay buffer, $M^t$ (comprising data from previous task datasets). The third term relates to weight regularization, introducing a penalty to avoid changing parameters that are relevant for previous tasks.

Therefore, when adapting the model to a new task using embodiments of the present method, it is sought to minimize the loss function using the parameters pertaining to the ensemble of specialized parameters, $\theta_U$.

The use of a replay buffer and the use of weight regularization are two optional steps of the method. Further, the replay buffer may be used without weight regularization and the weight regularization may be used without a replay buffer. However, the inventors have observed that it is particularly advantageous to combine the use of a replay buffer and of a weight regularization in order to enhance performance of the present continual learning method.

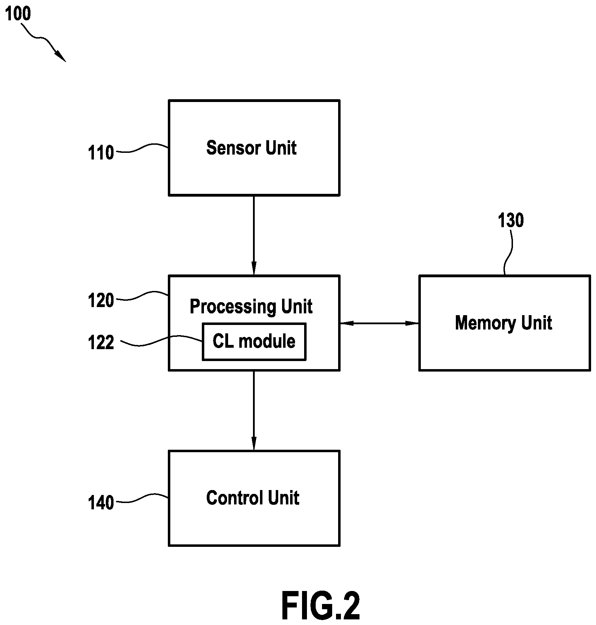

Aspects of a system according to the present disclosure are illustrated in FIG.2. The system comprises a sensor unit 110, a processing unit 120 communicatively coupled with a memory unit 130, and a control unit 140. The processing unit 120 is configured to implement steps of a method according to the present disclosure using a continual learning module 122.

The system 100 can be used for adapting controls of a machine or device to varying situations and environments (for example types and behavior of obstacles, and lighting conditions). The varying situations and environments are determined by input data that are captured by the sensor unit 110 which transfers such data to the continual learning module 122. Such module 122 comprises neural network-based models, generally pre-trained, which are adapted to the varying situations and environments (corresponding to varying tasks) by continual learning based on the method according to the present disclosure. Further, the continuously adapted model processes the input data and provides output data that are transmitted to the control unit 140 in order to enhance the control of the machine or device.

In embodiments, the system is a driver assistance system of a vehicle. In particular, the system may be part of an advanced driver assistance system (ADAS). To this end, the senor unit may comprise, for example, visible or infrared cameras, inertial measurements units 110, Lidar-based sensors, or any kind of sensors that can provide useful data for controlling the vehicle. The memory unit 130 can advantageously be configured to store data corresponding to previous tasks in order to enhance the adaptation of the model to new tasks.

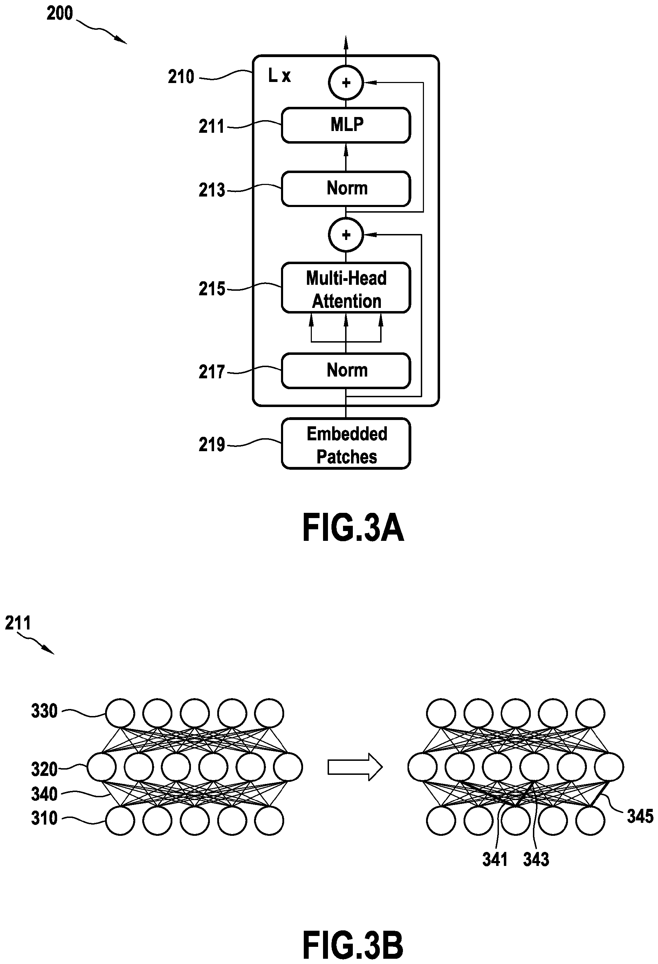

FIGS. 3A-3B represents aspects of a method according to the present disclosure. In particular, FIG. 3A is a diagram representing architecture of a transformer-based model 200, and FIG. 3B is a schematic representation of a multilayer perceptron comprised in the model 200 of FIG. 3A.

In reference to FIG. 3A, the transformer-based model 200 comprises a main block 210, repeated a plurality of times, L, to which is fed with input embedding (embedded patches) 219, for example derived data acquired from sensors 110. The model 200 processes the embedded patches 219 and provides output data that is a prediction or a set of predictions made by the model based on the received input data. The embedded patches may comprise images from a task dataset (or from a previous block) combined with positional embedding. In particular, the positional embedding may be related to the position of image patches within input images of the task dataset.

The main block 210 of the model 200 comprises a first normalization layer 217, a multi-head attention module 215, a second normalization layer 213, and a multilayer perceptron 211 (MLP).

In reference to FIG. 3B, the MLP 211 comprises two fully connected layers: a first layer (input layer 310) and a second layer (output layer 330). Further, the multilayer perceptron comprises one or more hidden layers 320.

Two successive layers of the MLP 211 are connected by edges 340 corresponding to parameters (weights) of the model. During training process, weights are generally adjusted to enable the network to learn and make accurate predictions or classifications on new data.

In the present description, the parameters of the MLP 211 comprise any parameters of the edges connecting layers in the MLP 211. Further, the parameters of the first layer of the MLP 211 are the parameters of the edges that are connected to the input layer 310 of the MLP 211. Further, the parameters of the second layer of the MLP are the parameters of the edges that are connected to the output layer 330 of the MLP 211.

In embodiments of the present continual learning method, when adapting the pre-trained model to a new task, parameters 341, 343, 345, which are specialized to this task, are identified among the parameters of the MLP 211 (with the method described above). Further, only such specialized parameters 341, 343, 345 are updated during the adaptation of the model to the task while the other parameters are fixed.

Note that the specialized parameters 341, 343, 345 illustrated in FIG. 3B are purely illustrative and do not represent a selection resulting from a specific calculation.

Advantageously, as described hereafter, the inventors have observed that it is particularly efficient to select specialized parameters among the parameters of the first layer 310 (input layer) of the MLP 211.

The inventors have also observed that it is possible to implement the method by selecting specialized parameters within entire neurons. In this case, special neurons are selected in the hidden layer 320, and all parameters corresponding to edges 340 that are connected to the selected neurons are selected.

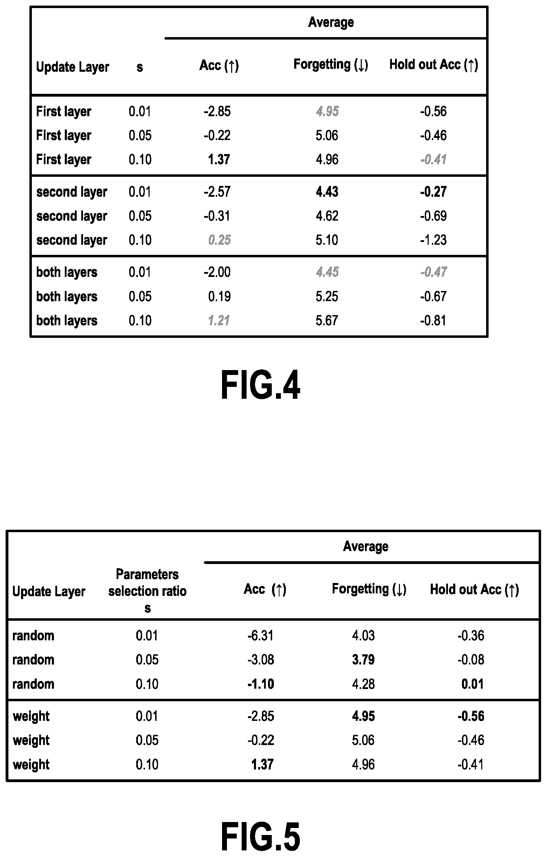

FIGS 4-5 are tables showing results of embodiments of the present method applied on CLIP pre-trained models (see [REF 1]).

Performance of the method in the different embodiments is evaluated using standard metrics (see for example [REF 11]). In particular, such metrics include average values of: Parameter selection ratio (s); Accuracy compared to Fine-tuning accuracy on the new tasks (Acc); Forgetting of knowledge acquired on previous tasks (Forgetting); Accuracy on a holdout dataset representing generic knowledge of the model compared to a frozen pre-trained model (Hold out Acc). The up/down arrows next to the metrics indicates that the performance of the method is considered higher when the value of the criteria is higher/lower, respectively.

The metrics are averaged over a plurality of 6 experimental datasets, 5 fine-grained datasets and 1 coarse-grained dataset. In particular, the used datasets are the Birdsnap dataset (see [REF 12]), the CUB-200-2011 dataset (see [REF 13]); the CIFAR100 dataset (see [REF 14]); the FGVC-Aircraft dataset (see [REF 15]); the Stanford Cars dataset (see [REF 16]); and the GTSRB dataset (see [REF 17]).

The chosen datasets are primarily selected due to their characteristic of initially yielding low performance for the CLIP pre-trained models without adaptation (i.e., exhibiting low zero-shot performance).

Specifically, the table in FIG.4 shows relative performance of the method when specialized parameters are selected among the first layer of the MLP only (row 3-5), among the second layer of the MLP only (row 6-8), and among both the first layer and the second layer of the MLP (row 9-11).

The results shown in FIG. 4 show that updating the parameters of the first layer of the MLP is particularly advantageous, benefitting both generalization performance of the pre-trained model and new tasks performance. Therefore, the adapted model has an improved performance on the new tasks while maintaining generic knowledge learned during the pre-training.

The table in FIG. 5 shows performance of the present method, wherein specialized parameters are selected based on their value using a score function (row 6-8, "weight"), compared to a baseline method wherein specialized parameters are selected randomly within the MLP of the transformer-based model (row 3-5, "random").

For both methods, experiments are conducted for three different parameter selection ratios, (s=0.01, s=0.05, s=0.10). Regarding the method according to the present disclosure, the selection of specialized parameters is made by selecting a top percentage of the parameters with the higher values of a score function using the techniques described in the present description. Regarding the baseline random method, the selection of specialized parameters is made by selecting randomly a group of parameters amounting to a given parameter selection ratio.

The results in the table of FIG. 5 show that, in terms of Accuracy, the selection of specialized parameters based on their values, is particularly advantageous over a random selection of a ratio of parameters. This observation stands true for the three parameter selection ratios used in the experiments. Further, it appears that, for the present method, the best performance is obtained for a parameter selection ratio equal to 0.1.

Although the present description predominantly describes embodiments of the continual learning method wherein the model is a CLIP-based image recognition model (in particular for application in a driver assistance system), the present continual learning approach is versatile, extending its application to diverse models performing various tasks, including but not limited to natural language processing tasks, classification tasks, dimensionality reduction tasks, etc.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented continual learning method comprising:

   - (S10) providing a model pre-trained for a first task;
   - (S20) selecting specialized parameters of the model that are specialized for a second task; and
   - (S30) adapting the model to the second task by updating said specialized parameters.

2. The method according to claim 1, further comprising:

   - freezing all parameters of the model other than the specialized parameters when adapting the model to the second task.

3. The method according to claim 1 or 2, wherein the step (S20) of selecting specialized parameters of the model that are specialized for a second task comprises:

   - providing a loss function evaluating the performance of the model applied to the second task; wherein the specialized parameters are selected among parameters that cause a largest reduction of the loss function for data points corresponding to the second task.

4. The method according to claim 3, wherein the specialized parameters are selected as a percentage of the parameters that have the largest magnitude of a gradient of the loss function with respect to data points corresponding to the second task, wherein such percentage is preferably inferior or equal to 10%.

5. The method according to any of the preceding claims, further comprising:

   - (S25) adding a penalty term to a loss function used for adapting the model to the second task in order to encourage the model to keep parameter values close to values learned during training for the first task.

6. The method according to claim 5, wherein the added penalty term is computed after each task and accumulated with the penalty term computed for previous tasks.

7. The method according to any of the preceding claims, wherein the model is sequentially adapted to a plurality of tasks by repeating steps of the method for subsequent tasks.

8. The method according to claim 7, wherein at least a subset of data used during adaptation of the model to a task is stored, and wherein, when the model is adapted to the subsequent task, the specialized parameters related to the subsequent task are updated in order to minimize a loss term evaluating performance of the model applied to such subset of data and to minimize a loss term evaluating performance of the model applied on the data of the subsequent task.

9. The method according to any of the preceding claims, wherein the model is a transformer-based image recognition model and the specialized parameters of a task comprise parameters of a multilayer perceptron of the image recognition model.

10. The method according to claim 9, wherein the specialized parameters comprise only parameters from an input layer of the multilayer perceptron.

11. The method according to claim 9 or 10, wherein the specialized parameters comprise only parameters from selected neurons of the multilayer perceptron.

12. A driver assistance system (100) comprising:

- a sensor unit (110) configured to capture data from one or more sensors, wherein the data includes information about a driving scene surrounding a vehicle;
- a processing unit (120) communicatively coupled to the sensor unit (110) comprising:
- a continual learning module (122) configured to process the captured data and continuously update parameters of a neural network based on the incoming data, in order to learn and adapt to changing driving scenarios over time, wherein the neural network is updated using the method according to any of claim 1 to 11 in order to retain knowledge from previously captured data while incorporating new data,
wherein the processing unit (120) is configured to receive processed data from the neural network and generate real-time predictions based on the driving scene;
- a memory unit (130) configured to store previously captured data used for continual learning of the neural network; and
- a control unit (140) configured to provide control signals based on the real-time predictions in order to enhance driver safety and vehicle control in response to given driving conditions.

13. A vehicle comprising the driver assistance system (100) according to claim 12.

14. A computer program set including instructions for executing the steps of a method of any one of claims 1 to 11, when said program set is executed by at least one computer.

15. A recording medium readable by a computer and having recorded thereon at least one computer program including instructions for executing the steps of the method of any one of claims 1 to 11.

S10 — Providing a model pre-trained for a first task

S20 — Selecting specialized parameters of the model that are specialized for a second task

S25 — Adding a penalty term to a loss function used for updating the model to the second task in order to encourage the model to keep parameters values close to values learned during training for the first task

S30 — Adapting the model to the second task by updating said specialized parameters

FIG.1

**100**

**110** — Sensor Unit

**120** — Processing Unit
**122** — CL module

**130** — Memory Unit

**140** — Control Unit

# FIG.2

200

210 — L x

211 — MLP

213 — Norm

215 — Multi-Head Attention

217 — Norm

219 — Embedded Patches

**FIG.3A**

211

330
320
340
310

341  343

345

**FIG.3B**

| Update Layer | s | Average | | |
|---|---|---|---|---|
| | | Acc (↑) | Forgetting (↓) | Hold out Acc (↑) |
| First layer | 0.01 | -2.85 | 4.95 | -0.56 |
| First layer | 0.05 | -0.22 | 5.06 | -0.46 |
| First layer | 0.10 | **1.37** | 4.96 | -0.41 |
| second layer | 0.01 | -2.57 | **4.43** | **-0.27** |
| second layer | 0.05 | -0.31 | 4.62 | -0.69 |
| second layer | 0.10 | 0.25 | 5.10 | -1.23 |
| both layers | 0.01 | -2.00 | 4.45 | -0.47 |
| both layers | 0.05 | 0.19 | 5.25 | -0.67 |
| both layers | 0.10 | 1.21 | 5.67 | -0.81 |

# FIG.4

| Update Layer | Parameters selection ratio s | Average | | |
|---|---|---|---|---|
| | | Acc (↑) | Forgetting (↓) | Hold out Acc (↑) |
| random | 0.01 | -6.31 | 4.03 | -0.36 |
| random | 0.05 | -3.08 | **3.79** | -0.08 |
| random | 0.10 | **-1.10** | 4.28 | **0.01** |
| weight | 0.01 | -2.85 | **4.95** | **-0.56** |
| weight | 0.05 | -0.22 | 5.06 | -0.46 |
| weight | 0.10 | **1.37** | 4.96 | -0.41 |

# FIG.5

Europäisches Patentamt

European Patent Office

Office européen des brevets

# EUROPEAN SEARCH REPORT

Application Number

EP 23 19 2190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DU XIAOCONG ET AL: "Single-Net Continual Learning with Progressive Segmented Training", 2019 18TH IEEE INTERNATIONAL CONFERENCE ON MACHINE LEARNING AND APPLICATIONS (ICMLA), IEEE, 16 December 2019 (2019-12-16), pages 1629-1636, XP033719712, DOI: 10.1109/ICMLA.2019.00267 [retrieved on 2020-02-13] * abstract * * page 1629, left-hand column, paragraph 1 * * page 1629, left-hand column, last paragraph – right-hand column, paragraph 1 * * page 1630, right-hand column, paragraph 4; figure 1 * * page 1631, left-hand column, paragraph 2 * * page 1631, right-hand column, paragraph 2 – page 1632, left-hand column, paragraph 3 * * page 1632, right-hand column, paragraph 2 * ----- -/-- | 1-15 | INV. G06N3/0455 G06N3/084 G06N3/096 TECHNICAL FIELDS SEARCHED (IPC) G06N |

The present search report has been drawn up for all claims

| Place of search | Date of completion of the search | Examiner |
|---|---|---|
| Munich | 7 February 2024 | Herri, Edmond |

EPO FORM 1503 03.82 (P04C01)

Europäisches
Patentamt

European
Patent Office

Office européen
des brevets

# EUROPEAN SEARCH REPORT

Application Number

EP 23 19 2190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHAHEEN KHADIJA ET AL: "Continual Learning for Real-World Autonomous Systems: Algorithms, Challenges and Frameworks", JOURNAL OF INTELLIGENT, SPRINGER NETHERLANDS, DORDRECHT, vol. 105, no. 1, 23 April 2022 (2022-04-23), XP037812011, ISSN: 0921-0296, DOI: 10.1007/S10846-022-01603-6 [retrieved on 2022-04-23] * page 2, left-hand column, paragraph 4 * * page 9, right-hand column, paragraph 4 – last paragraph * * page 13, left-hand column, paragraph 1 – page 15, left-hand column, paragraph 1; figure 20 * | 1-15 | |
| A | MATTHIAS DE LANGE ET AL: "A continual learning survey: Defying forgetting in classification tasks", ARXIV.ORG, CORNELL UNIVERSITY LIBRARY, 201 OLIN LIBRARY CORNELL UNIVERSITY ITHACA, NY 14853, 16 April 2021 (2021-04-16), XP081921824, DOI: 10.1109/TPAMI.2021.3057446 * page 4, left-hand column, last paragraph * * page 6, left-hand column, last paragraph – right-hand column, paragraph 3 * | 1-15 | TECHNICAL FIELDS SEARCHED (IPC) |

The present search report has been drawn up for all claims

| Place of search | Date of completion of the search | Examiner |
|---|---|---|
| Munich | 7 February 2024 | Herri, Edmond |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

**EP 4 510 041 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RADFORD** ; **ALEC** ; **KIM** ; **JONG WOOK** ; **HAL-LACY** ; **CHRIS et al.** Learning transferable visual models from natural language supervision. In : International conference on machine learning. *PMLR*, 2021, 8748-8763
- **LI, JUNNAN** ; **LI, DONGXU** ; **SAVARESE, SILVIO et al.** Blip-2: Bootstrapping language-image pre-training with frozen image encoders and large language models. *arXiv:2301.12597*, 2023
- **MALLYA, ARUN** ; **DAVIS, DILLON** ; **LAZEBNIK, SVETLANA**. Piggyback: Adapting a single network to multiple tasks by learning to mask weights. *Proceedings of the European conference on computer vision (ECCV)*, 2018, 67-82
- **WANG, YABIN** ; **HUANG, ZHIWU** ; **HONG, XIAO-PENG**. S-prompts learning with pre-trained transformers: An occam's razor for domain incremental learning. *Advances in Neural Information Processing Systems*, 2022, vol. 35, 5682-5695
- **WANG, ZIFENG** ; **ZHANG, ZIZHAO** ; **EBRAHIMI, SAYNA et al.** Dualprompt: Complementary prompting for rehearsal-free continual learning. *European Conference on Computer Vision. Cham : Springer Nature*, 2022, 631-648
- **WANG, ZIFENG** ; **ZHANG, ZIZHAO** ; **LEE, CHEN-YU et al.** Learning to prompt for continual learning. *Proceedings of the IEEE/CVF Conference on Computer Vision and Pattern Recognition*, 2022, 139-149
- **XIANG, JIANNAN** ; **TAO, TIANHUA** ; **GU, YI et al.** Language Models Meet World Models: Embodied Experiences Enhance Language Models. *arXiv:2305.10626*, 2023
- **ZHENG, ZANGWEI** ; **MA, MINGYUAN** ; **WANG, KAI et al.** Preventing Zero-Shot Transfer Degradation in Continual Learning of Vision-Language Models. *arXiv*, 2023

- **ALJUNDI, RAHAF** ; **BABILONI, FRANCESCA** ; **ELHOSEINY, MOHAMED et al.** Memory aware synapses: Learning what (not) to forget. *Proceedings of the European conference on computer vision (ECCV)*, 2018, 139-154
- **CHAUDHRY, ARSLAN** ; **ROHRBACH, MARCUS** ; **ELHOSEINY, MOHAMED et al.** On tiny episodic memories in continual learning.. *arXiv*, 2019
- **DE LANGE, MATTHIAS** ; **ALJUNDI, RAHAF** ; **MASANA, MARC et al.** A continual learning survey: Defying forgetting in classification tasks. *IEEE transactions on pattern analysis and machine intelligence*, 2021, vol. 44 (7), 3366-3385
- **BERG, THOMAS** ; **LIU, JIONGXIN** ; **WOO LEE, SEUNG et al.** Birdsnap: Large-scale fine-grained visual categorization of birds. *Proceedings of the IEEE Conference on Computer Vision and Pattern Recognition*, 2014, 2011-2018
- **WAH, CATHERINE** ; **BRANSON, STEVE** ; **WELINDER, PETER et al.** *The caltech-ucsd birds-200-2011 dataset*, 2011
- **KRIZHEVSKY, ALEX** ; **HINTON, GEOFFREY et al.** *Learning multiple layers of features from tiny images*, 2009
- **MAJI, SUBHRANSU** ; **RAHTU, ESA** ; **KANNALA, JUHO et al.** Fine-grained visual classification of aircraft. *arXiv:1306.5151*, 2013
- **KRAUSE, JONATHAN** ; **STARK, MICHAEL** ; **DENG, JIA et al.** 3d object representations for fine-grained categorization. *Proceedings of the IEEE international conference on computer vision workshops*, 2013, 554-561
- **STALLKAMP, JOHANNES** ; **SCHLIPSING, MARC** ; **SALMEN, JAN et al.** Man vs. computer: Benchmarking machine learning algorithms for traffic sign recognition. *Neural networks*, 2012, vol. 32, 323-332

17